Europäisches Patentamt

European Patent Office

Office européen des brevets

(11) Numéro de publication: **0 306 354 B1**

(12) **FASCICULE DE BREVET EUROPEEN**

(45) Date de publication de fascicule du brevet: **09.09.92** (51) Int. Cl.⁵: **B61F 5/10**, B61F 5/14, F16F 9/38

(21) Numéro de dépôt: **88401384.8**

(22) Date de dépôt: **08.06.88**

(54) **Ecran protecteur pour membrane de suspension pneumatique et procédé pour sa réalisation.**

(30) Priorité: **04.09.87 FR 8712344**

(43) Date de publication de la demande:
**08.03.89 Bulletin 89/10**

(45) Mention de la délivrance du brevet:
**09.09.92 Bulletin 92/37**

(84) Etats contractants désignés:
**AT BE CH DE ES FR GB GR IT LI LU NL SE**

(56) Documents cités:
**US-A- 2 208 540**
**US-A- 4 222 805**

(73) Titulaire: **CAOUTCHOUC MANUFACTURE ET PLASTIOUES**
**143bis, rue Yves le Coz**
**F-78005 Versailles(FR)**

(72) Inventeur: **Daignot, Bernard**
**Soucy s/Loire**
**F-58300 Decize(FR)**
Inventeur: **Bechu, Jean-Pierre**
**Les Poissons 20 ter rue de Bezons**
**F-92400 Courbevoie(FR)**

EP 0 306 354 B1

Rank Xerox (UK) Business Services

## Description

L'invention est du domaine de la protection contre les chocs de projectiles: elle s'applique plus précisément aux véhicules équipés d'une suspension pneumatique à membrane déformable, où l'accroissement de flexibilité, en vue d'améliorer le confort des passagers, a comme corollaire une fragilité accrue à l'impact d'objets soulevés par la grande vitesse de déplacement du véhicule et qui se trouvent projetés sur les parois des membranes de suspension pneumatique.

Pour améliorer le confort de suspension des voitures de ses trains à grande vitesse, la S.N.C.F. a été amenée à demander au fabricant des membranes de suspension d'utiliser des parois beaucoup plus minces que celles de toutes les conceptions antérieures, offrant, de ce fait, une flexibilité améliorée dans la suspension verticale où les parois de la membrane roulent sur elles-memes, mais surtout dans le confort transversal, obtenu par des déformations dissymétriques provoquant une déformation en cisaillement des parois minces de la membrane de suspension.

La protection contre les projections diverses, jusque là assurée par la robustesse de la réalisation des membranes, grace à l'emploi de composites multicouche de renforcements textiles - tels que décrits, par exemple, dans les brevets français 1.218.300 de Dunlop ou 2.448.661 de Continental - ou encore, par l'emploi, pour ces renforcements, de cables uniquement métalliques, devient caduque et rend ces nouvelles suspensions à parois minces vulnérables à l'impact des projectiles.

En particulier l'hiver, des accumulations de neige ou de glace, tombant à grande vitesse sur le ballast de la voie ferrée, ont entraîné des projections de pierres du ballast, projections peut-être accrues par le croisement de deux trains, et il arrive que ces pierres meurtrissent les membranes de suspension, créant ainsi des amorces de déchirure préjudiciables à leur bon fonctionnement. En effet, sans couper immédiatement les fils du renforcement textile, l'impact de quelques arêtes vives des pierres ainsi projetées provoque des déchirures du revêtement superficiel, devenu très fin, et rend le renforcement textile très sensible aux intempéries et au vieillissement, conduisant, au bout de quelque temps de fonctionnement, jusqu'à la rupture de la membrane de suspension.

Le remplacement de la membrane de suspension détruite demande à l'exploitant une manutention très coûteuse. Il est donc nécessaire de limiter les risques d'impact des projectiles.

On a conçu, pour la protection des membranes de suspension des écrans à base de feuilles plastiques, plus ou moins souples, mais le problème est aggravé par la grande flexibilité des nouvelles membranes qui viennent, en fin de course, au contact tangentiel de leur support métallique pour y prendre appui, progressivement, par une surface variable qui doit donc être exempte de tout risque de coincement de petites pierres qui représenteraient autant d'agressions pour la membrane de suspension.

Des écrans élastomériques, plus ou moins armés de renforcements textiles, peuvent être conçus avec un rôle analogue à celui des passages de roues sur les poids lourds, par exemple, le plus souvent réalisés par un moulage sous pression d'élastomères thermoplastiques ou de plastiques, dits renforcés au choc, par la conception des macromolécules des matériaux les constituants.

La présente invention a pour objectif de proposer un écran de protection des membranes de suspension pneumatique, - ci-après désigné par le terme écran protecteur - offrant une protection efficace, ainsi qu'un mode de réalisation économique.

L'invention propose une solution d'écran protecteur selon les caractéristiques de la Revendication 1 offrant un amortissement important des énergies de choc, énergies qui atteignent des niveaux non négligeables lors de l'impact des pierres de ballast.

L'invention concerne également les modes possibles de réalisation d'un tel écran protecteur à partir de feuilles de composition élastomérique renforcée de fibres courtes.

Conformément à la partie caractérisante de la Revendication 3, l'invention consiste à utiliser, pour la réalisation de ces écrans de protection - dont la forme approximativement torique, non développable, est connue - un composite multicouche, constitué par la superposition de couches minces croisées et alternées de compositions élastomériques renforcées de fibres courtes, naturelles artificielles ou synthétiques, lesdites fibres courtes étant orientées au cours du calandrage en feuilles, sous l'influence du laminage sous un taux de cisaillement élevé provoquant une proportion très majoritaire d'orientation des fibres dans le sens du laminage.

Le composite multicouche présente, dans le sens de l'épaisseur, les caractéristiques de la matrice élastomérique protégée contre les intempéries, la déchirure, les projections d'huiles ou d'eaux de lavage. La déformation au choc, réversible, aura l'énergie d'absorption d'un élastomère.

Dans les autres déformations de l'écran protecteur, non développable, à deux rayons de courbure, le module de cisaillement de cette surface sera la résultante du renforcement multidirectionnel dû à la présence des fibres orientées, lors de la confection.

Le matériau composite multicouche sera donc autoporteur, la particularité présentée dans les figures illustrant la description ci-après ne résultant que du mode de fixation sur un support rigide.

Les caractéristiques et variantes de l'invention seront mieux comprises à la lecture de la description ci-après et en se référant aux dessins, sur lesquels :

- la figure 1 montre la disposition générale de l'écran protecteur, en vue et en coupe;
- la figure 2 est une vue - supposée transparente - de l'écran protecteur, montrant les inserts métalliques de fixation;
- la figure 3 est une coupe de détail dans l'épaisseur de l'écran protecteur;

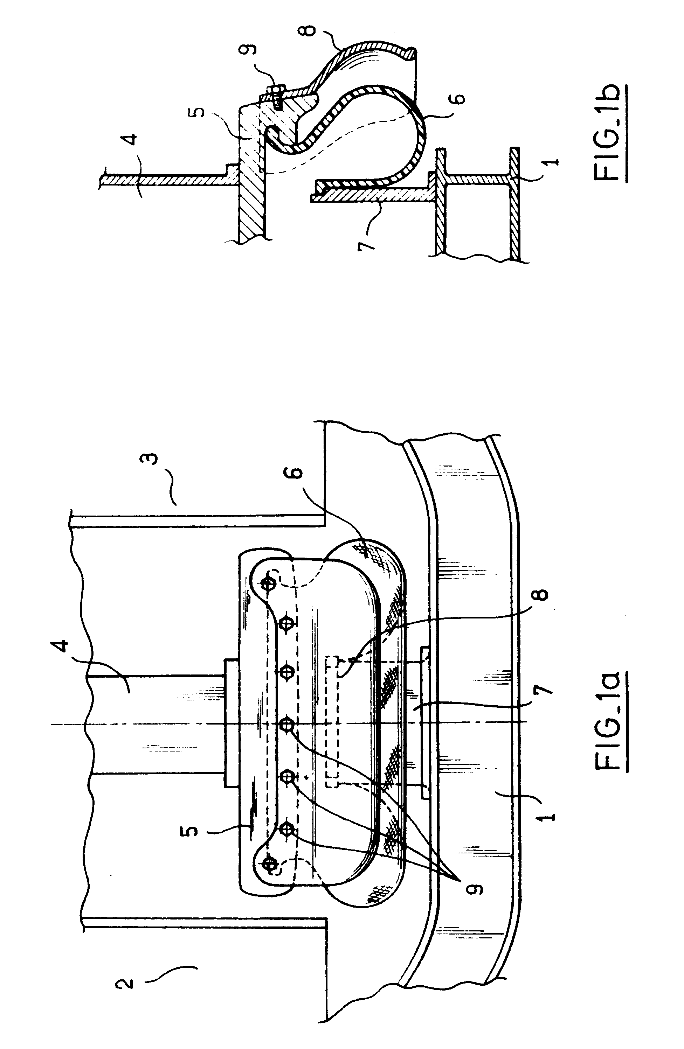

Dans la figure 1, la vue 1a représente ce que voit l'observateur du train articulé à grande vitesse, depuis le quai, par exemple, la vue partielle 1b étant une coupe par le plan tranversal.

Le chassis de bogie (1) est chargé de porter les extrémités des caisses (2) et (3) par l'intermédiaire d'un anneau d'appui (4) qui constitue la particularité des trains à intercirculation. Ledit anneau d'appui (4) repose par une couronne (5) de fixation de la membrane souple de suspension (6) qui roule dans ses débattements verticaux sur une sorte de piston (7) fixé au chassis de bogie (1). Les rebords de celui-ci et les accessoires tels qu'amortisseurs qui y sont fixés ne forment pas suffisamment écran aux projections de pierres et un écran protecteur (8), objet de l'invention, fixé par des vis (9) sur la couronne (5), doit venir protéger la membrane dans les directions les plus vulnérables tout en laissant libres, en particulier, les débattements transversaux dynamiques accroissant la valeur permanente desdits débattements prise en virage, due à une insuffisance ou à un excès de devers.

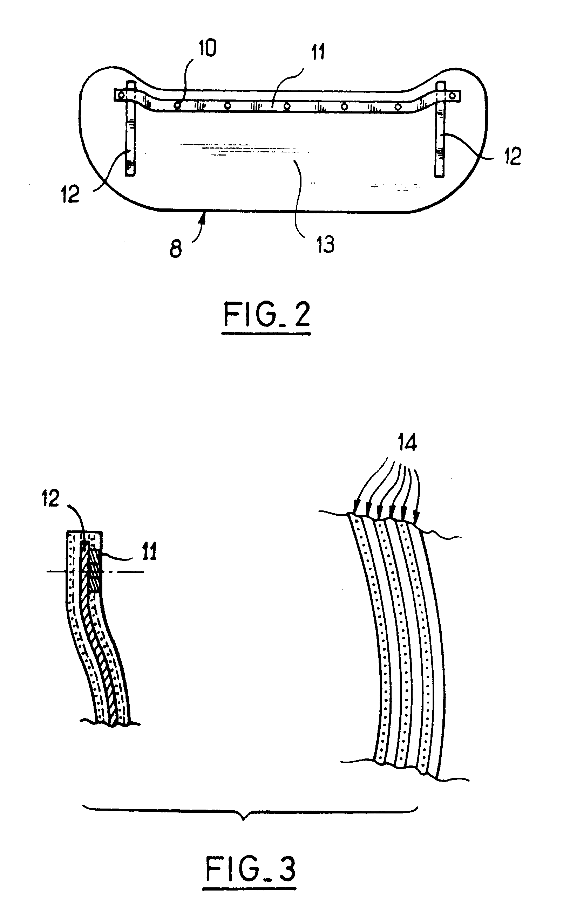

La figure 2 représente une vue en transparence de l'écran protecteur (8) où des trous de fixation (10) doivent être ménagés dans un insert rigide, formé de préférence de fers plats du commerce.

Une barre (11), rectiligne ou formée comme illustré sur la figure, est courbée à rayon approximativement constant autour de l'axe de la suspension pour suivre la forme de la couronne (5) où des vis (9) seront fixées à travers les trous (10).

Des baleines de raidissement (12) noyées dans l'épaisseur de l'écran protecteur sont soudées à la barre (11). On a représenté la disposition préférentielle de deux baleines latérales qui raidissent le corps de l'écran protecteur (8) par ses extrémités, mais qui sont masquées en retrait de la façade des véhicules (2) et (3) pour éviter les mouvements dynamiques dus aux tourbillons aérodynamiques, tandis que le centre (13) de l'écran protecteur est en pleine gomme et recevra, de façon réversible, le choc des projectiles et éventuellement les coups accidentels de chariots de manutention sur les quais.

Masquant à peu près totalement la membrane de suspension, l'écran protecteur constitue, en outre, une protection contre les risques de vandalisme et évite une atteinte de la suspension par des objets frôlés, dépassant du gabarit par exemple.

La figure 3 explique la constitution du composite multicouche, parfaitement invisible après vulcanisation, par une coupe faite dans l'écran protecteur (8) vers le bord et en pleine paroi telle que sa région centrale (13).

Le matériau nécessaire à la réalisation de ces écrans de protection se présente, le plus souvent, sous forme de feuilles d'épaisseur de l'ordre de 0, 5 à 1 millimètre.

La matrice est constituée d'un élastomère naturel ou synthétique qui recevra une formulation adaptée aux contraintes de l'utilisation, par addition de charges, d'adjuvants de protection contre le vieillissement et d'agents de vulcanisation. Préférentiellement, l'élastomère de la matrice sera du polychloroprène.

Les matériaux textiles de renforcement de la matrice élastomérique peuvent être constitués, à titre d'exemples non limitatifs, de fibres de bois, de fils ou de fibres coupées de rayonne, de polyamide, de polyester ou d'aramide.

Les feuilles ainsi constituées de la matrice élastomérique renforcée de fibres courtes parallèles - ci-après désignées par le terme de feuilles composites - ont la particularité de présenter, à l'état cru de la composition élastomérique, c'est-à-dire avant sa vulcanisation, le comportement rigide du papier dans une direction privilégiée et le module d'élasticité, l'apparence et la déformabilité à l'état cru du caoutchouc dans la direction perpendiculaire.

Dans le plan de la barre (11) et des baleines de raidissement (12), l'épaisseur de 2 ou de 3 millimètres de tôle d'acier vient se substituer à plusieurs des couches (14), représentées symboliquement alternées, les unes montrant des fibres en bout, les autres en longitudinal ou coupées en oblique. Une disposition intéressante sera constituée, par exemple, de huit couches dans une pleine paroi ayant une épaisseur totale de 6 millimètres. Les baleines de raidissement (12) seront, dans une disposition préférencielle, noyées dans la fibre neutre, c'est-à-dire au milieu de la paroi, la barre (11) viendra, préférentiellement affleurer en surface, pour permettre l'appui des vis de fixation, ou bien sera noyée et complétée de rondelles soudées venant à fleur seulement autour des trous de fixation (10) ménagés à travers cette barre.

Les feuilles composites peuvent être superposées comme toute composition élastomérique utilisée dans les procédés de confection employés de manière traditionnelle dans l'industrie de transformation des polymères : soit par enroulement sur tambour comme dans la réalisation des pneumatiques à carcasse dite croisée, où le galbage des formes non développables est permis par l'allongement dans la direction perpendiculaire à celle de l'orientation des fibres, soit par superposition des couches croisées dans une ébauche découpée, de forme plane ou partiellement creusée.

Les feuilles composites seront avantageusement superposées avec des orientations différentes d'une couche à l'autre, afin d'assurer au composite multicouche ainsi constitué un module de déformation très élevé.

Les orientations entre deux feuilles composites peuvent prendre toutes les valeurs, de 0 à 90 degrés, selon la rigidité souhaitée pour le composite multicouche

Comme dans le procédé connu de fabrication des pneumatiques, la déformation par glissement entre les feuilles composites est rendu possible par l'établissement d'une pression créée par une vessie de galbage, ou par la fermeture d'un moule écrasant une ébauche prédécoupée.

La fonction des fibres orientées dans des directions croisées étant de conférer au composite multicouche un module de déformation considérablement plus élevé que celui de la matrice élastomérique, il n'est pas grave de perdre, lors d'un tel glissement entre feuilles composites, une partie de l'orientation privilégiée lors de la pose. En particulier, un réseau de renforts constitué de feuilles composites orientées dans deux directions, croisées ou perpendiculaires, permettrait à la forme non développable des déformations de cisaillement, par rotation entre ces deux feuilles composites.

En toute rigueur, le blocage d'une forme non développable demande de prévoir au moins trois directions pour les feuilles composites de façon à constituer, lors de l'empilage, des triangles élémentaires non déformables à l'échelle du module de la matrice.

Préférentiellement, les feuilles composites seront donc disposées selon trois directions faisant, entre elles, un angle sensiblement égal à 120 degrés.

Par conséquent, le procédé de fabrication des écrans protecteurs, dès qu'il utilise au moins trois directions privilégiées de pose pour les feuilles composites, ne présente qu'une réduction très limitée de module lors des mouvements de matière dus au galbage, contrairement à ce qui se produirait avec des couches de cablés textiles disposés en parallèle dont la perte d'alignement dans une zone comprimée conduirait à l'effondrement local du module de déformation - aussi bien en traction (limitée) qu'en compression - par ondulation des fibres résistantes.

La confection des écrans protecteurs est suivie d'une vulcanisation par les procédés utilisés de manière classique dans l'industrie de transformation du caoutchouc, c'est-à-dire soit par vulcanisation en étuve ou en autoclave après galbage de la forme et sanglage, soit par vulcanisation sous pression, en moule fermé, après superposition de feuilles composites prédécoupées et galbées individuellement.

Lors du moulage sous pression et de la vulcanisation simultanée, les mouvements de matière autour des armatures pour les noyer, dus à l'epaisseur maintenue constante du moule, feront perdre - au moins partiellement - l'orientation privilégiée des fibres dans les feuilles composites, sans inconvénient selon les observations faites plus haut, évitant même une localisation des contraintes si le module du renforcement se réduit à leur proximité.

Tous ces inserts métalliques recevront, bien entendu, un traitement approprié en vue d'assurer la liaison par collage entre l'armature métallique et la composition élastomérique et pour les protéger contre les intempéries et l'attaque par les eaux de lavage lorsque l'on cherche à ce qu'ils affleurent.

En résumé, l'écran protecteur objet de l'invention constitue un moyen de protection privilégié pour les membranes de suspension pneumatique, suffisamment raidi par un cadre métallique incorporé, mais à l'abri des déformations permanentes sans risque de désolidarisation du matériau multicouche par vieillissement local dans les zones de raidissement par ce cadre.

L'écran protecteur présente les propriétés amortissant les chocs d'un élastomère renforcé de fibres, tout en ayant l'endurance et l'insensibilité aux agressions apportées par une matrice intimement liée à des fibres courtes de module notablement plus élevé que le sien.

Le procédé de fabrication proposé fournit un moyen économique et facile à mettre en oeuvre d'anisotropie préferentielle, mais peu exigeant sur les mouvements incontrôlés de la matière. Il n'exige pas la mise en place de moyens coûteux pour les cadences de fabrication envisagées.

L'homme de l'art peut, bien entendu, apporter à l'écran protecteur et à son procédé de fabrication, objets de l'invention, et à leurs variantes, décrites à titre d'exemples non limitatifs, diverses modifications sans sortir du cadre de l'invention, telle qu'elle est définie dans les revendications.

## Revendications

1. Ecran protecteur (8) contre les chocs de projectiles pour véhicules équipés d'une suspension pneumatique à membrane déformable (6), constitué d'un composite multicouche composé de feuilles composites (14), minces, croisées et alternées, galbées, lors de la confection de l'ébauche avant vulcanisation, caractérisé en ce que lesdites feuilles composites (14) sont réalisées en une composition élastomérique renforcée de fibres courtes, naturelles, artificielles, ou synthétiques, lesdites fibres courtes étant orientées au cours du calandrage de la composition élastomérique renforcée, par laminage grâce à un taux de cisaillement élevé.

2. Ecran protecteur selon la revendication 1, comportant des inserts métalliques servant à la fixation, caractérisé en ce que lesdits inserts métalliques, constitués d'une barre (11) et de baleines de raidissement (12), sont noyés dans l'épaisseur de la paroi protectrice et sont disposés à la périphérie de l'écran protecteur (8), de forme générale torique, de façon à être masqués par la paroi des véhicules et à ne présenter aux chocs des projectiles que le bombé de l'écran (8), en composite multicouche qui prend appui, par sa périphérie, sur lesdits inserts métalliques (11) et (12).

3. Procédé de fabrication d'un écran protecteur (8) conforme à l'une des revendications 1 ou 2, au cours duquel la confection de l'ébauche se fait par enroulement et galbage de feuilles composites (14), caractérisé en ce que ladite confection est réalisée sur un tambour mécanisé portant la forme de galbage, lesdites feuilles composites (14) étant disposées dans au moins deux directions différentes, et, préférentiellement, dans trois directions sensiblement à 120 degrés les unes des autres, les inserts métalliques, composés de la barre (11) et des baleines de raidissement (12) étant noyés au voisinage de la fibre neutre, et en ce que l'ébauche ainsi constituée est vulcanisée en étuve ou en autoclave, après sanglage.

4. Procédé de fabrication d'un écran protecteur (8) conforme à l'un des revendications 1 ou 2, caractérisé en ce que la confection de l'ébauche est réalisée par superposition de feuilles composites (14), de formes prédécoupées, disposées dans au moins deux directions différentes, et, de préférence, trois directions sensiblement à 120 degrés les unes des autres, les inserts métalliques (11) et (12), servant à la fixation, étant noyés au voisinage de la fibre neutre, au cours de cette confection, ladite ébauche étant ensuite insérée dans un moule fermé pour vulcanisation sous pression.

**Claims**

1. A shield (8) for protection against impacts by projectiles, for vehicles provided with pneumatic suspension having a deformable membrane (6), composed of a multilayer composite made up of thin curved composite sheets (14) which are intersecting and alternating, when the blank is made up before vulcanisation, characterised in that said composite sheets (14) are made of an elastomeric composition reinforced with short natural, artificial or synthetic fibres, said short fibres being oriented by rolling, during the calendering of the reinforced elastomeric composition, thanks to a high shear rate.

2. A protective shield according to Claim 1, comprising metal inserts acting as fasteners, characterised in that said metal inserts, composed of a bar (11) and stiffening rods (12) are embedded within the thickness of the protective wall and are arranged at the periphery of the protective shield (8), which is generally toric in form, so as to be masked by the vehicle walls and presenting to impacts by projectiles only the rounded part of the shield (8), made of a multilayer composite which is supported at its periphery by said metal inserts (11) and (12).

3. A process for manufacturing a protective shield (8) according to one of Claims 1 or 2, during which the blank is prepared by winding and curving composite sheets (14), characterised in that the preparation takes place on a mechanised drum bearing the curved form, said composite sheets (14) being arranged in at least two different directions and preferably in three directions at substantially 120 degrees from one another, the metal inserts composed of the bar (11) and the stiffening rods (12) being embedded close to the neutral line, and in that the blank thus constituted is vulcanised in an oven or autoclave, after strapping.

4. A process for manufacturing a protective shield (8) according to one of Claims 1 or 2, characterised in that the blank is prepared by superimposing composite sheets (14), in pre-cut shapes, arranged in at least two different directions and preferably in three directions at substantially 120 degrees from one another, the metal inserts (11) and (12) acting as fasteners being embedded close to the neutral line during this preparation, said blank then being inserted into a sealed mould for vulcanisation under pressure.

**Patentansprüche**

1. Schutzschirm (8) gegen den Aufprall von Projektilen für mit einer pneumatischen Federung aus einer verformbaren Membran (6) ausgerüstete Fahrzeuge, aus einem vielschichtigen Verbund von zusammengesetzten dünnen, gekreuzten und regelmäßig abwechselnden Folien (14), die während der Anfertigung des Vorformlings vor der Vulkanisation konturiert werden, dadurch gekennzeichnet, daß die zusammengesetzten Folien (14) auf der Basis einer elastomeren Zusammensetzung, die mit kurzen, natürlichen, künstlichen bzw. synthetischen Fasern verstärkt ist, gebildet sind, wobei die kurzen Fasern beim Kalandrieren der elastomeren, verstärkten Zusammensetzung durch Walzen mit erhöter Scherkraft ausgerichtet werden.

2. Schutzschirm nach Anspruch 1 mit metallischen Einsätzen die der Befestigung dienen, dadurch gekennzeichnet, daß aus einer Stange (11) und Versteifungsstäbchen (12) gebildeten metallische Einsätze in die Stärke der Schutzwandung eingelassen und an der Peripherie des Schutzschirms (8) von im allgemeinen torischer Form derart angeordnet sind, daß sie durch die Wandung der Fahrzeuge abgedeckt sind und dadurch nur die Wölbung des Schirms (8) aus dem vielschichtigen Verbund dem Aufprall der Projektile aussetzen, der sich an seiner Peripherie über die metallischen Einsätze (11) und (12) abstützt.

3. Verfahren zum Herstellen eines Schutzschirms (8) gemäß einem der Ansprüche 1 oder 2, bei dem der Vorformling durch Wickeln und Konturieren der zusammengesetzten Folien (14) angefertigt wird, dadurch gekennzeichnet, daß diese Anfertigung auf einer die Form der Kontur aufweisenden mechanisierten Trommel erfolgt, wobei die zusammengesetzten Folien (14) in mindestens zwei verschiedenen Richtungen angeordnet sind und vorzugsweise in drei verschiedenen Richtungen jeweils etwa um 120° gegeneinander versetzt sind, wobei die der Befestigung dienenden metallischen Einsätze, die aus der Stange (11) und den Versteifungsstabchen (12) gebildet sind, in der Nachbarschaft der neutralen Faser im Verlauf dieser Anfertigung eingelassen werden und wobei der so gebildete Vorformling im Ofen oder im Autoklaven nach dem Abbinden vulkanisiert wird.

4. Verfahren zum Herstellen eines Schutzschirms (8) gemäß einem der Ansprüche 1 oder 2, dadurch gekennzeichnet, daß die Anfertigung des Vorformlings durch Übereinanderlegen der zusammengesetzten Folien (14) erfolgt, die in Form vorgeschnitten und mindestens in zwei verschiedenen Richtungen, vorzugsweise in drei verschiedenen Richtungen, jeweils etwa um 120° zueinander versetzt angeordnet sind, wobei die der Befestigung dienenden metallischen Einsätze (11) und (12) in der Nachbarschaft der neutralen Faser im Verlauf dieser Anfertigung eingelassen werden und der Vorformling anschließend in eine geschlossene Form eingesetzt wird, um unter Druck zu vulkanisieren.

FIG.1b

FIG.1a

FIG. 2

FIG. 3